(19) Europäisches Patentamt
European Patent Office
Office européen des brevets

(11) **EP 4 395 144 A1**

(12) **EUROPEAN PATENT APPLICATION**

(43) Date of publication:
**03.07.2024 Bulletin 2024/27**

(21) Application number: **23216283.4**

(22) Date of filing: **13.12.2023**

(51) International Patent Classification (IPC):
**H02K 49/10** *(2006.01)* **H02K 7/14** *(2006.01)*
**H02K 7/116** *(2006.01)* **H02K 9/04** *(2006.01)*
**B24B 23/00** *(2006.01)*

(52) Cooperative Patent Classification (CPC):
**H02K 7/145; B24B 23/00; H02K 7/116; H02K 9/04;**
**H02K 49/102;** H02K 2213/03; H02K 2213/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2022 US 202263477065 P**

(71) Applicant: **Black & Decker Inc.**
**New Britain, CT 06053 (US)**

(72) Inventor: **CIRINCIONE, Robert John**
**Cockeysville, 21030 (US)**

(74) Representative: **SBD IPAdmin**
**270 Bath Road**
**Slough, Berkshire SL1 4DX (GB)**

(54) **MAGNETIC TRANSMISSION AND POWER TOOL HAVING A MAGNETIC TRANSMISSION**

(57) An electric hand-held power tool can include a motor shaft that includes an input portion that is configured to couple to a motor of the electric hand-held power tool and includes an output portion that is rigidly coupled to the input portion of the motor shaft. A magnetic transmission can be concentrically surrounding the motor shaft between the input portion of the motor shaft and the output portion of the motor shaft, to form a motor shaft channel through the magnetic transmission through which the motor shaft extends from the input portion of the motor shaft to the output portion of the motor shaft.

FIG. 2E

**Description**

FIELD

This application relates generally to magnetic transmissions and, in particular, to magnetic transmissions for electric hand-held power tools.

BACKGROUND

It is known to rigidly couple a fan to a motor shaft to generate an airflow to cool the motor. Fan parameters, such as blade count and blade height can be adjusted to modify the flow of air to the motor. In some applications, for example, in compact motors with small airflow paths, or motors that generate a low output speed, the fan operating at the motor speed may not generate sufficient airflow to cool the motor efficiently. What is needed is a mechanism capable of solving this problem.

SUMMARY

Embodiments of the present invention can provide magnetic transmissions and power tools having a magnetic transmission . Pursuant to these embodiments, an electric hand-held power tool can include a motor shaft that includes an input portion that is configured to couple to a motor of the electric hand-held power tool and includes an output portion that is rigidly coupled to the input portion of the motor shaft. A magnetic transmission can be concentrically surrounding the motor shaft between the input portion of the motor shaft and the output portion of the motor shaft, to form a motor shaft channel through the magnetic transmission through which the motor shaft extends from the input portion of the motor shaft to the output portion of the motor shaft.

In some embodiments according to the invention, the motor shaft rotates at a motor shaft speed and the electric hand-held power tool further includes a fan that can be rigidly coupled to the magnetic transmission and configured to rotate around the motor shaft at a fan speed that is greater than motor shaft speed to cool the motor of the electric hand-held power tool.

In some embodiments according to the invention, the magnetic transmission can include a fixed stator that is concentrically mounted around the motor shaft and a rotating input that is concentrically mounted around the motor shaft adjacent to the fixed stator. A rotating output of the magnetic transmission can be concentrically located around the motor shaft adjacent to the rotating input, where the rotating output can be configured to magnetically couple to the rotating input across an air gap separating the rotating input from the rotating output.

In some embodiments according to the invention, the fixed stator, the rotating input, and the rotating output are located overlapping one another in a radial direction relative to the motor shaft to provide a radial configuration of the magnetic transmission.

In some embodiments according to the invention, the fixed stator, the rotating input, and the rotating output are spaced apart from one another along the motor shaft to provide an axial configuration of the magnetic transmission.

In some embodiments according to the invention, the magnetic transmission includes a magnetic flux modulator concentrically surrounding the motor shaft, where the magnetic flux modulator includes a non-ferritic body with a plurality of ferritic elements spaced apart within the non-ferritic body at respective ferritic positions. A rotor can include a rotor body with a plurality of first permanent magnets spaced apart within the rotor body, where the plurality of first permanent magnets have respective magnetic poles oriented in a direction facing the plurality of ferritic elements in the magnetic flux modulator. A stator can include a plurality of second permanent magnets spaced apart within the stator, where the plurality of second permanent magnets have respective magnetic poles oriented in an opposing direction facing the plurality of ferritic elements in the magnetic flux modulator opposite the rotor.

In some embodiments according to the invention, an electric hand-held power tool can include a unitary motor shaft configured to rotate at a motor shaft speed responsive to rotation of a motor of the electric hand-held power tool and a magnetic transmission configured to magnetically couple rotation of the unitary motor shaft to a fan to cool the motor of the electric hand-held power tool.

In some embodiments according to the invention, the electric hand-held power tool can further include a bearing having the fan mounted thereon, where the bearing includes an opening therein wherein the unitary motor shaft extends through the opening of the bearing to enable the fan to rotate around the unitary motor shaft at a stepped-up speed relative to a speed of the unitary motor shaft.

In some embodiments according to the invention, the magnetic transmission further includes a fixed stator, a rotating input, and a rotating output spaced apart from one another along the unitary motor shaft to provide an axial configuration of the magnetic transmission.

In some embodiments according to the invention, the bearing is a first bearing and the electric hand-held power tool further includes a second bearing having the fan mounted thereon, where the second bearing is located on the unitary motor shaft spaced apart from the first bearing, where the second bearing includes a second opening therein where the unitary motor shaft extends through the second opening.

In some embodiments according to the invention, the magnetic transmission further includes a fixed stator, a rotating input, and a rotating output including the fan that are located overlapping one another in a radial direction relative to the unitary motor shaft to provide a radial configuration of the magnetic transmission.

In some embodiments according to the invention, a magnetic transmission assembly includes a housing having a longitudinal axis that extends from an input located at a proximate end of the magnetic transmission assembly to an output located at a remote end of the magnetic transmission assembly. A rotary shaft channel extends along the longitudinal axis of the magnetic transmission assembly from the proximate end to the remote end, the rotary shaft channel is configured to receive a rotary shaft to couple to an electric hand-held power tool motor at the proximate end. A magnetic transmission is inside the housing concentrically surrounding the rotary shaft channel, where the magnetic transmission includes a magnetic flux modulator mounted on the rotary shaft and concentrically surrounding the rotary shaft channel, the magnetic flux modulator including a non-ferritic body supporting a plurality of ferritic elements spaced apart at respective ferritic positions. A rotor is rotatably supported relative to the rotary shaft and includes a rotor body supporting a plurality of first permanent magnets spaced apart at first respective angular positions. A stator is secured to the housing and supports a plurality of second permanent magnets spaced apart at second respective angular positions. A fan is concentrically located around the rotary shaft channel facing the proximate end of the magnetic transmission assembly and rigidly coupled to the rotor.

In some embodiments according to the invention, the rotary shaft of the magnetic transmission assembly is a motor shaft received from the electric hand-held power tool motor in the rotary shaft channel extending from the input to the output and the magnetic transmission assembly further includes a bushing rigidly coupling the motor shaft to the magnetic flux modulator.

In some embodiments according to the invention, respective magnetic poles of the plurality of first permanent magnets and respective magnetic poles of the plurality of second permanent magnets are all oriented in a radial direction that is perpendicular to the longitudinal axis of the magnetic transmission assembly.

In some embodiments according to the invention, rotor and the fan are a unitary structure further including at least one bearing arranged to at least radially support the rotor relative to the rotary shaft in a freely rotatable manner.

In some embodiments according to the invention, the magnetic flux modulator forms a cylindrical volume including an open end. The rotor extends into the open end of the cylindrical volume to position the plurality of first permanent magnets of the rotor within the cylindrical volume radially inward of the plurality of second permanent magnets of the stator with the plurality of ferritic elements located radially therebetween.

In some embodiments according to the invention, respective magnetic poles of the plurality of first permanent magnets and respective magnetic poles of the plurality of second permanent magnets are all oriented in a direction that is parallel to the longitudinal axis of the magnetic transmission assembly.

In some embodiments according to the invention, the rotor and the fan are a unitary structure further including a single bearing arranged to at least radially support the rotor relative to the rotary shaft in a freely rotatable manner.

In some embodiments according to the invention, the plurality of first permanent magnets of the rotor, the plurality of second permanent magnets of the stator, and the plurality of ferritic elements are positioned in respective first, second, and third radial planes that are oriented in a direction that is perpendicular to the rotary shaft channel spaced apart from one another along the longitudinal axis.

In some embodiments according to the invention, the plurality of first permanent magnets provides N pole pairs, the plurality of second permanent magnets provides M pole pairs, the plurality of ferritic elements is provided by N+M, and a ratio of a speed of the fan to a speed of rotation of the magnetic flux modulator is given by (N+M)/ M.

## BRIEF DESCRIPTION OF THE DRAWINGS

Figures 1A to 1B are renderings illustrating an electric handheld angle grinder including a magnetic transmission in a radial configuration in accordance with some embodiments of the present invention.

Figures 2A to 2E are renderings illustrating a magnetic transmission assembly in the radial configuration in accordance with some embodiments of the present invention.

Figures 3A to 3C are renderings illustrating a magnetic transmission assembly in the electric handheld angle grinder of Figure 1 in the radial configuration in accordance with some embodiments of the present invention.

Figures 4A to 4B are renderings illustrating an electric handheld angle grinder including a magnetic transmission in an axial configuration in accordance with some embodiments of the present invention.

Figures 5A to 5D are renderings illustrating a magnetic transmission assembly in the axial configuration in accordance with some embodiments of the present invention.

Figure 5E is a side view rendering of a magnetic transmission assembly in the axial configuration showing the orientations of the poles of the permanent magnets included in the stator and rotor of the magnetic transmission and the ferritic elements located therebetween in accordance with some embodiments of the present invention.

Figures 6A to 6C are renderings illustrating a magnetic transmission assembly in the electric handheld angle grinder of Figures 4A- and 4B in the axial configuration in accordance with some embodiments of the present invention.

## DETAILED DESCRIPTION

Although some of the figures herein illustrate electric hand-held angle grinders, it will be understood that aspects of the magnetic transmissions described herein can be embodied in other electric hand-held power tools or other applications and/or devices.

As discussed above, the output of a motor can be used to drive a fan to generate airflow to cool the motor. The airflow of the fan may be increased, for example, by increasing the number of fan blades or the height of the fan blades. However, as appreciated by the present inventors, increasing the size and/or speed of the fan blades can involve tradeoffs with ergonomic factors, such as size limits on a hand-held tool, and the speed of the motor shaft that may be used to drive the fan.

Accordingly, in some embodiments according to the invention, the rotational speed of the fan can be stepped-up relative to the rotational speed of the motor shaft using a magnetic transmission that is also configured for compactness to allow for use in a hand-held power tool. For example, in some embodiments according to the invention, a rotating input, such as a magnetic flux modulator of the magnetic transmission, is driven by the motor shaft. When the magnetic flux modulator rotates, the magnetic fields provided by the permanent magnets of a stator are modulated by the magnetic flux modulator to impart a torque to the permanent magnets of a rotating output, such as a rotor, which can be rigidly coupled to the fan. The torque generated by the magnetic flux modulator causes the rotor and the fan to rotate at a greater speed than the motor shaft. The greater pressure generated by the increased fan speed can allow the motor to be cooled efficiently even if the motor is configured to operate at a low speed, the motor is remote from the fan, or the motor is designed so compactly that it does not include sufficiently large air channels for cooling the motor.

Because the magnetic transmission rotates the fan at higher speed, the fan can be kept relatively small yet still effectively cool the motor. Moreover, keeping the fan small can allow the tool to be more appropriately sized for hand-held applications, particularly those where the tool housing that accommodates the motor and the fan are sized to be comfortably held in an operator's hand. For example, rotating the fan at higher speed to generate higher static pressure can enable higher airflow and power density. In addition, while maintaining a tool girth (i.e., tool housing circumference) of about 145 mm or less, the use of a magnetic transmission to drive the fan can efficiently cool the motor producing a power-to-size ratio of greater than about 7:1 (maximum power of tool (W)/girth of tool in gripping area (mm)) and a size to airflow ratio of greater than about 29:1 (girth of tool in gripping area (mm)/airflow through tool (CFM)). The use of the magnetic transmission can also allow the fan to be decoupled from the motor shaft, which can allow the fan to continue to rotate even in situations where the motor shaft becomes jammed.

As described herein, embodiments according to the invention can include both radial and axial configurations of the magnetic transmission where the magnetic transmission concentrically surrounds a rotary shaft. The rotary shaft, as described herein, may be the motor shaft, or a separate shaft rotatably coupled to the motor shaft. For example, in some embodiments according to the invention, the rotary shaft includes an input portion that is rigidly coupled to the motor and an output portion that is rigidly coupled to an output of the tool and/or a transmission assembly of the tool having a gear reduction system to apply torque to a workpiece. The input and output portions of the rotary shaft can be rigidly coupled together so that the rotary shaft passes through the center of the magnetic transmission in a rotary shaft channel. The fan can be mounted to concentrically surround the rotary shaft channel and can be rigidly coupled to the magnetic transmission so that the fan can rotate at a stepped-up speed relative to the rotary shaft to efficiently cool the motor. Although embodiments according to the invention described herein include both radial and axial configurations, other embodiments are also within the scope of the present invention.

In some embodiments according to the invention, the magnetic transmission can include a stator, a rotor, and a magnetic flux modulator that rotates with the rotary shaft and is positioned between the stator and the rotor. The magnetic flux modulator is rigidly coupled to, and concentrically surrounds, the rotary shaft of the tool. The magnetic flux modulator includes a plurality of ferritic elements, such as iron, that are embedded in a non-ferritic body at ferritic positions that are spaced apart within the non-ferritic body. In some embodiments according to the invention, the ferritic elements can include iron or an iron alloy.

The stator of the magnetic transmission remains stationary and includes a plurality of permanent magnets that are spaced apart opposite to the plurality of ferritic elements in the magnetic flux modulator. The poles of the plurality of permanent magnets are arranged in the stator to alternate between the north and south poles being oriented in a direction facing the plurality of ferritic elements. The alternating arrangement of the poles in the stator provides what is referred to a number of first pole pairs.

The rotor of the magnetic transmission is rigidly coupled to the fan and includes a plurality of permanent magnets that are embedded in the rotor body and are spaced apart in the body opposite to the plurality of ferritic elements in the magnetic flux modulator. The poles of the plurality of permanent magnets in the rotor are arranged to alternate between the north and south poles being oriented in a direction facing the plurality of ferritic elements. The alternating arrangement of the poles in the rotor provides what is referred to a number of second pole pairs.

In operation, the rotor rotates relative to the rotary shaft at a speed that is given by:

$$\text{Number of Ferrite Elements (F)} = \text{Number of First (Stator) Pole Pairs}$$

$$\text{(N)} + \text{Number of Second (Rotor) Pole Pairs (M)}$$

$$\text{Speed Multiplier} = F / M$$

In an example embodiment, the stator includes 8 poles (i.e., 4 pole pairs), the rotor includes 6 poles (i.e., 3 pole pairs), and the magnetic flux modulator includes 7 ferritic elements, so the speed multiplier is 7 / 3 = 2.34, meaning that the rotor will rotate at 2.34 times the speed of the magnetic flux modulator (i.e., the rotary shaft).

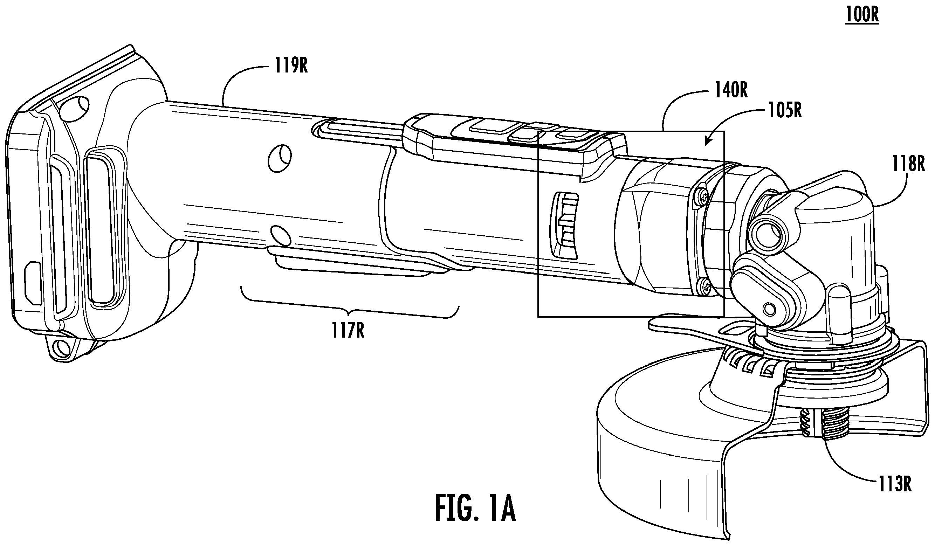

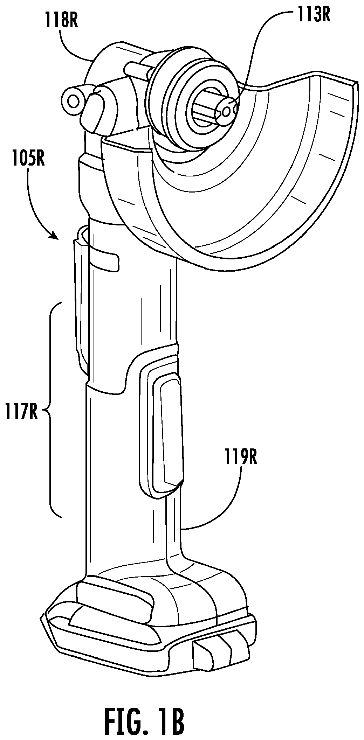

Figures 1A and 1B are renderings illustrating an electric handheld angle grinder 100R including a magnetic transmission assembly 105R in a radial configuration in accordance with some embodiments of the present invention. The electric handheld angle grinder 100R includes an outer case 119R that encloses the magnetic transmission assembly 105R at the highlighted section 140R located between a motor section 117R and an output spindle 113R of the grinder 100R used to apply torque to a workpiece. Although not shown, the electric handheld angle grinder 100R can also include other components, such as a battery receptacle that is capable of receiving a removable power tool battery pack, a trigger switch actuatable by the operator mounted on the outer case 119R, an electronics module that regulates supply of power from the battery pack to the motor based on an input from the trigger switch, and a gear case 118R mounted on a frontal end of the outer case 119R that transfers torque from the motor to the output spindle 113R. In some embodiments according to the invention, the electric handheld angle grinder case 119R can have a "girth" of approximately 100 mm to 155 mm, preferably approximately 110 to 145 mm.

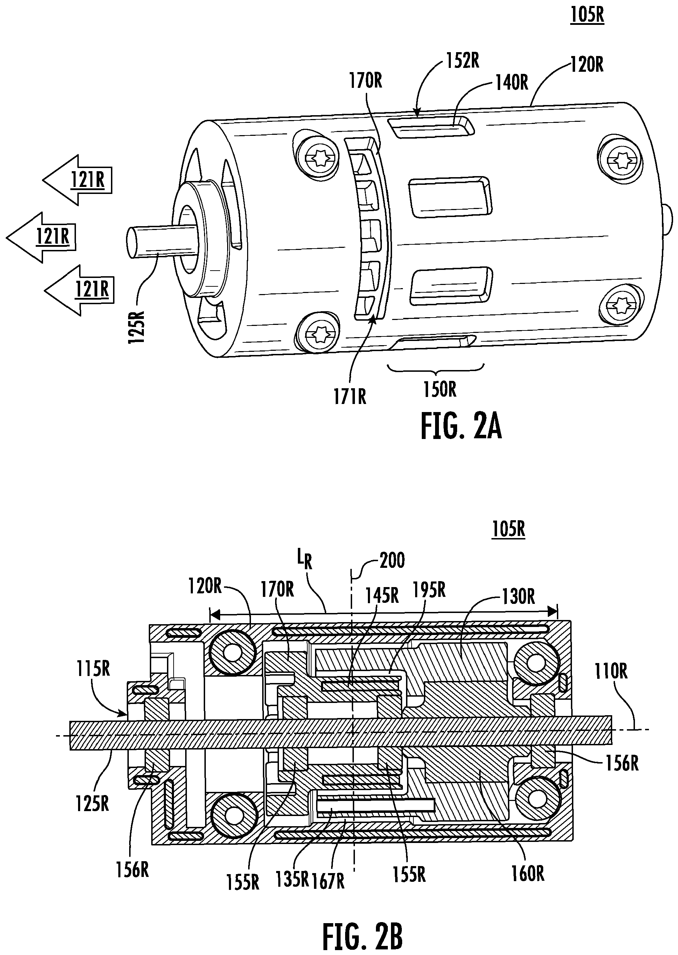

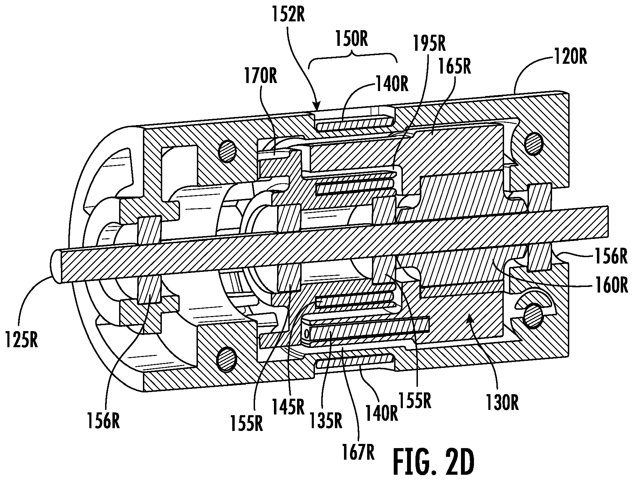

Figures 2A to 2E are renderings illustrating the magnetic transmission assembly 105R in the radial configuration in accordance with some embodiments of the present invention. These figures respectively depict a perspective view, a side cross-section view, an exploded view, a perspective cross-section view, and an axial cross-section view of the magnetic transmission assembly 105R taken along line 200 of Figure 2B. In an embodiment, the magnetic transmission assembly 105R includes a housing 120R that is arranged to be fixedly mounted to the outer case 119R of the power tool and forms a stator 150R of the magnetic transmission assembly 105R. The magnetic transmission assembly 105R further includes a rotor 180R that is fixed to the fan 170R, and a magnetic flux modulator 165R that rotates with the rotary shaft and is positioned between the stator 150R and the rotor 180R.

As described above, in some embodiments of the invention, the stator 150R is rotatably fixed to the housing 120R of the magnetic transmission assembly 105R. In an embodiment, as shown in these figures, the stator 150R is formed integrally as a part of the housing 120R. Alternatively, the stator 150R may be provided as a separate annular component fixedly received within the housing 120R. The stator 150R concentrically surrounds a rotary shaft 125R and includes a plurality of permanent magnets 140R that are positioned within the stator 150R at respective locations around the rotary shaft 125R. In an embodiment, the stator 150R includes a series of outer pockets 152R formed as recessed regions in the outer surface of the housing 120R that receive the permanent magnets 140R therein. In an embodiment, when the magnetic transmission is mounted within the power tool outer case 119R, the permanent magnets 140R are securely retained between the housing 120R and the outer case 119R to fix their positions. Alternatively, and/or additionally, an adhesive is added to the pockets 152R to securely fix the permanent magnets 140R. As shown in Figure 2A, the housing 120R additionally includes openings 171R therein to enable the airflow 121R formed in radial alignment with the fan 170R.

The plurality of permanent magnets 140R in the stator 150R are oriented so that the poles of the permanent magnets are oriented in alternating directions. In some embodiments according to the invention, each of the permanent magnets 140R is oriented so that the respective pole points in a direction that is opposite to the direction of the poles of each of the neighboring magnets. Accordingly, the arrangement of the permanent magnets 140R in the stator 150R can provide a number of poles for the stator 150R where the poles alternate between N-S or S-N orientations. It will be understood that in some embodiments according to the invention, the permanent magnets of the stator 150R can have different arrangements that can provide a different number of poles for the stator 150R.

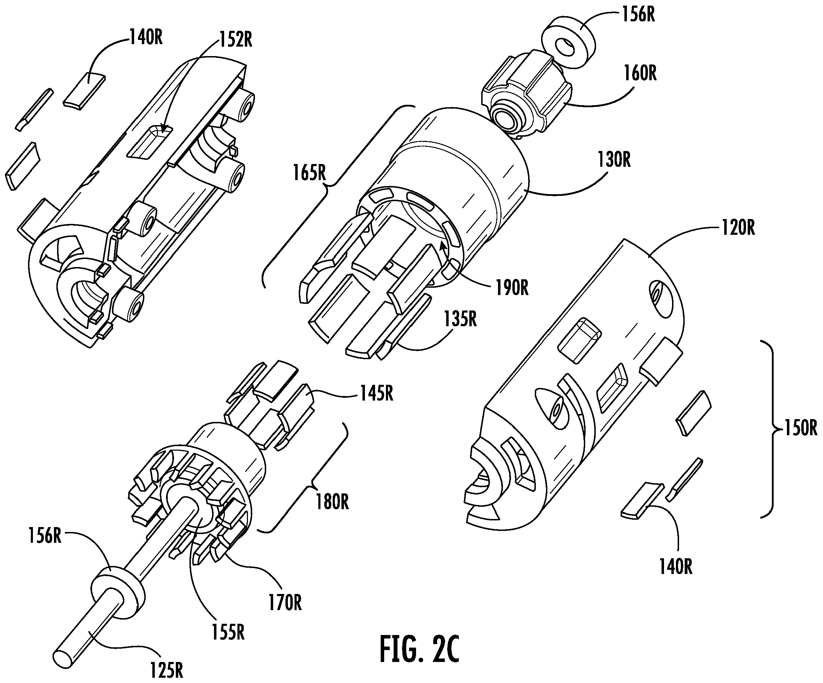

As shown in Figures 2B and 2C, a magnetic flux modulator 165R and a rotor 180R are positioned concentrically around a longitudinal axis 110R between the rotary shaft 125R and the stator 150R. The rotary shaft 125R passes through a central rotor shaft channel 115R of the magnetic transmission assembly 105R that extends along the axis 110R. The rotary shaft 125R is axially and radially supported to the housing 120R via a pair of end bearings 156R located on the two ends of the housing 120R, which allow free rotation of the rotary shaft 125R relative to the housing 120R. Mounted on the rotary shaft 125 within the magnetic transmission assembly 105R are a pair of bearings 155R that support the rotor 180R relative to the rotary shaft 125R in a freely rotatable manner, and a bushing 160R that rigidly couples a magnetic flux modulator body 130R of the magnetic flux modulator 165R to the rotary shaft 125R.

Each of the bearings 155R includes an inner surface rotatably fixed to the rotary shaft 125R and an outer surface rotatably fixed to the rotor 180R, thus allowing the rotor 180R to be freely rotatable relative to the rotary shaft 125R. The bearings 155R are spaced apart along the rotary shaft 125R to support both ends of the rotor 180R. As shown in Figure 2B, for example, the first bearing 155R is located on the rotary shaft 125 radially inward of the fan 170R, which is formed integrally with the rotor 180R. The second bearing 155R is located radially inward of a plurality of permanent magnets 145R of the rotor 180R adjacent to (or directly in contact with) the bushing 160R.

The magnetic flux modulator body 130R is rigidly coupled to the rotary shaft 125R by the bushing 160R so that the magnetic flux modulator 165R rotates as the rotary shaft 125R spins. The magnetic flux modulator body 130R can be formed of a non-ferritic material, such as plastic, and securely houses a plurality of ferritic elements 135R embedded therein at respective ferritic positions. Specifically, the magnetic flux modulator body 130R includes an annular body having a first portion that is mounted on the bushing 160R and a second portion that extends from the first portion around the plurality of permanent magnets 145R of the rotor 180R and houses the plurality of ferritic elements 135R. The plurality of ferritic elements 135R are received axially into a series of axially-extending slots formed within the second portion of the magnetic flux modulator body 130R. The plurality of ferritic elements 135R are separated from the plurality of permanent magnets 140R in the stator 150R by an air gap 167R and are oriented to direct the magnetic flux from the stator 150R toward the rotor 180R as the magnetic flux modulator body 130R rotates.

As shown in Figures 2C to 2E, the interior of the magnetic flux modulator body 130R is configured to form a cylindrical volume 190R that is surrounded by the plurality of ferritic elements 135R. The rotor 180R is positioned inside the cylindrical volume 190R separated from the modulator 165R by the air gap 195R. In operation, the magnetic flux generated by the plurality of permanent magnets 140R of the stator 150R can be modulated by the ferritic elements 135R of magnetic flux modulator 165R to apply torque to the magnetic field provided by the plurality of permanent magnets 145R of the rotor 180R.

The rotor 180R includes the plurality of permanent magnets 145R embedded in a portion 131R of the rotor 180R oriented so that the respective pole of each magnet points in a direction that is opposite to the poles of each of the neighboring magnets. In an embodiment, the rotor 180R includes an annular body extending from the fan 170R through which a series of axial slots are formed. The permanent magnets 145R are securely received inside the axial slots radially inward of the ferritic elements 135R of magnetic flux modulator 165R. Accordingly, the arrangement of the permanent magnets 145R in the rotor 180R can provide a number of second poles for the rotor 180R where the poles alternate between N-S or S-N orientations. It will be understood that in some embodiments according to the invention, the permanent magnets of the rotor 180R can have different arrangements that can provide a different number of poles for the rotor 180R.

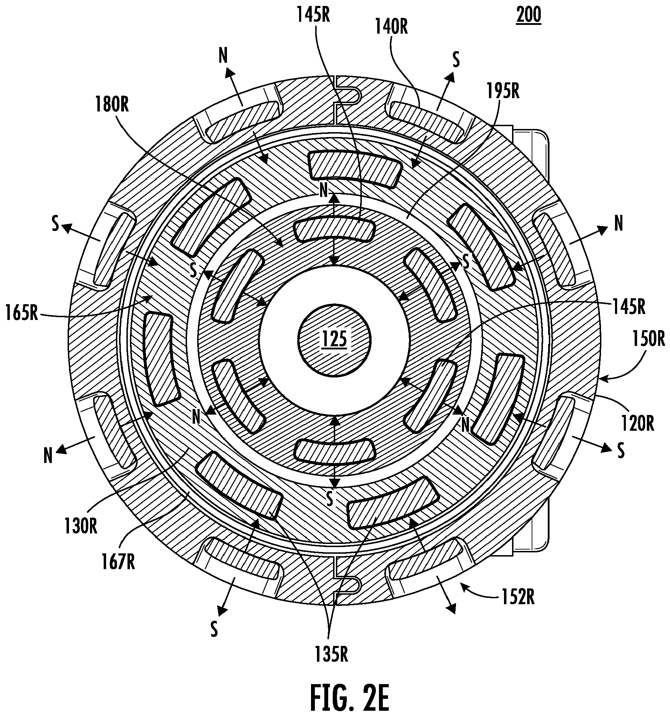

As shown in the axial cross-sectional view of Figure 2E, in the radial configuration of the magnetic transmission assembly 105R, the poles of the permanent magnets 140R of the stator 150R are oriented in alternating directions so that the pole of each magnet is oriented opposite to the poles of the neighboring magnets 140R. In this arrangement, the stator 150R provides N pole pairs (e.g., 4 poles in this example).

As further shown in Figure 2E and 2C, the rotor 180R is positioned inside the cylindrical volume 190R formed by the interior of the magnetic flux modulator body 130 of the magnetic flux modulator 165R so that the permanent magnets 145R of the rotor 180R radially overlap at least parts of the ferritic elements 135R of the magnetic flux modulator 165R and the permanent magnets 140R of the stator 150R in non-contacting relationships. The poles of the permanent magnets 145R in the rotor 180R are oriented in alternating directions so that the pole of each magnet is oriented opposite to the poles of the neighboring magnets 145R. In this arrangement, the rotor 150R provides M pole pairs (e.g., 3 pole pairs in this example). As discussed above, in an embodiment, the number of ferrite elements 135R = M + N (e.g., 7 in this example).

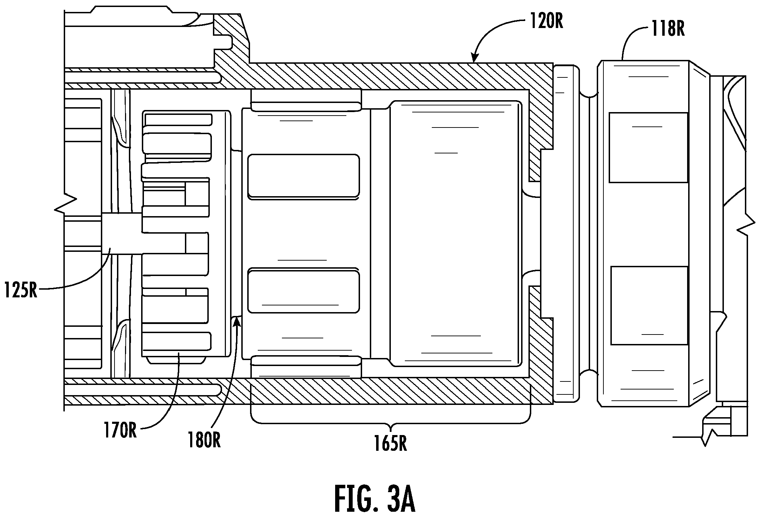

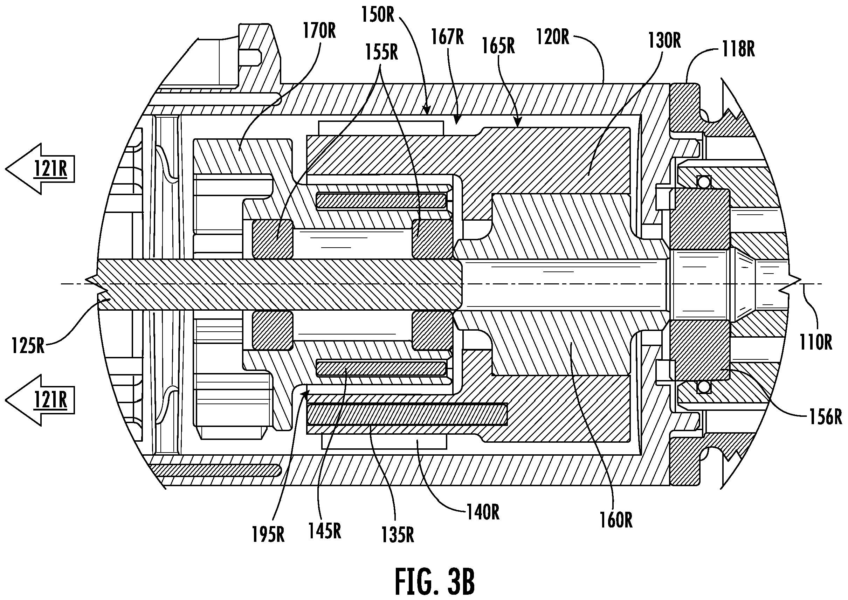

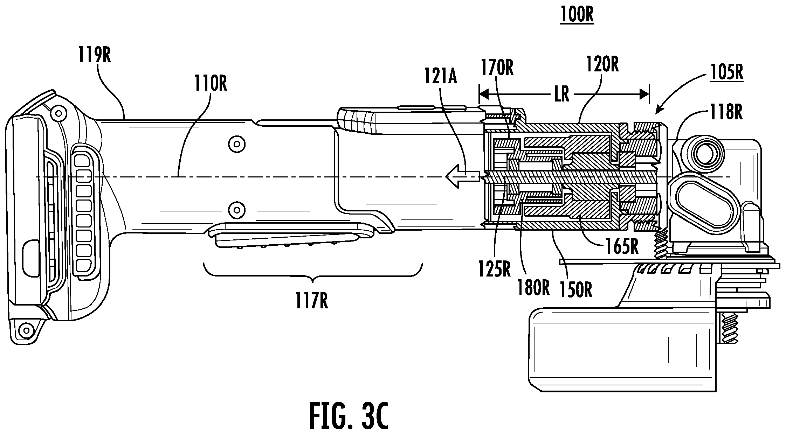

Figures 3A to 3C are renderings illustrating the magnetic transmission assembly 105R in the radial configuration disposed within the electric handheld angle grinder 100R in accordance with an alternative embodiment of the present invention. In this embodiment, housing 120R is not mounted within the outer case 119R of the power tool. Rather, the housing 120R forms a part of the tool housing and is mounted between the outer case 119R and the gear case 118R. Specifically, Figures 3A and 3B respectively show renderings of side and side cross-section views of the magnetic transmission assembly 105R mounted between the outer case 119R and the gear case 118R. Figure 3C is a side cross section view of the of the magnetic transmission assembly 105R in electric handheld angle grinder 100R mounted between the outer case 119R and the gear case 118R. According to Figure 3C, the magnetic transmission assembly 105R can have a length LR along the longitudinal axis 110R of the rotary shaft 125R. The fan 170R can be located to surround the rotary shaft 125R and face the motor section 117R. In operation, the rotary shaft 125R rotates at the motor speed to provide input to the magnetic transmission assembly 105R, which provides an output to the fan 170R at the stepped-up speed to generate airflow 121R through the case 119R past the motor. Alternatively, in an embodiment, the airflow generated by the fan travels through the motor in the direction of the transmission assembly 105R, through a series of air openings provided on a front end of the housing 120R, and expelled through peripheral openings 171R. In some embodiments according to the invention, the rotary shaft 125R rotates at a maximum speed of up to 30,000 rpm, allowing the magnetic transmission assembly 105R to rotate the fan 170R at a maximum speed of up to about 60,000 rpm.

Similar to the previous embodiment, the plurality of ferritic elements 135R are shown in Figure 3B embedded into the non-ferritic body 130R of the magnetic flux modulator 165R. Further, the rotor 180R is shown positioned inside the cylindrical volume 190R formed by the magnetic flux modulator body 130R so that the permanent magnets 145R face the plurality of ferritic elements 135R and the permanent magnets 140R of the stator 150R. The permanent magnets 145R of the rotor 180R are oriented to face the plurality of ferritic elements 135R and the permanent magnets 140R of the stator 150R. As further shown in Figure 3B, the permanent magnets 140R of the stator 150R, the ferritic elements 135R of the magnetic flux modulator 165R, and the permanent magnets 145R of the rotor 180R are separated from one another by first and second air gaps 167R and 195R to provide a non-contacting relationship therebetween so that the rotation of the rotary shaft 125R can be magnetically coupled to the rotation of the fan 170R.

Unlike the previous embodiment, however, the plurality of permanent magnets 140R in the stator 150R are secured to the inner surface of the housing 120R. In an embodiment, the inner surface of the housing 120R may include a series of recessed regions sized to receive the permanent magnets 140R therein. The permanent magnets 140R may be fixedly retained within the recessed regions via, for example, an adhesive, a snap-fit, etc. Alternatively, the housing 120R may be molded around the permanent magnets 140R to fully contain the permanent magnets 140R within the body of the housing 120R.

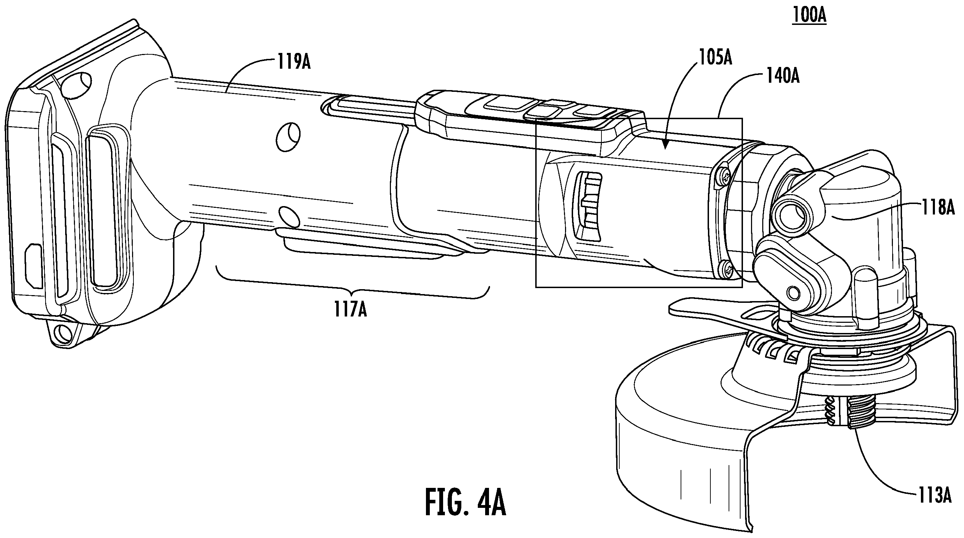

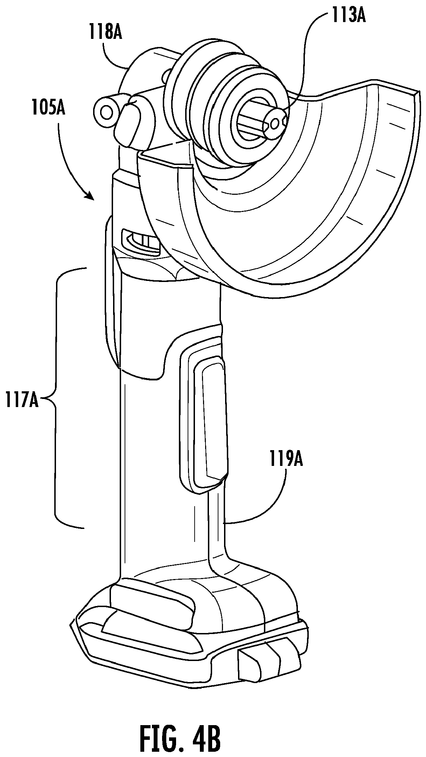

Figures 4A and 4B are renderings illustrating an electric handheld angle grinder 100A including a magnetic transmission assembly 105A in an axial configuration in accordance with some embodiments of the present invention. The electric handheld angle grinder 100A includes an outer case 119A that encloses the magnetic transmission assembly 105A at the highlighted section 140A located between a motor section 117A and an output spindle 113A of the grinder 100A used to apply torque to a workpiece. Although not shown, the electric handheld angle grinder 100A can also include other components, such as a battery receptacle that is capable of receiving a removable power tool battery pack, a trigger switch actuatable by the operator mounted on the outer case 119A, an electronics module that regulates supply of power from the battery pack to the motor based on an input from the trigger switch, and a gear case 118A mounted on a frontal end of the outer case 119A that transfers torque from the motor to the output spindle 113A. In some embodiments according to the invention, the electric handheld angle grinder case 119A can have a "girth" of approximately 100 mm to 155 mm, preferably approximately 110 to 145 mm.

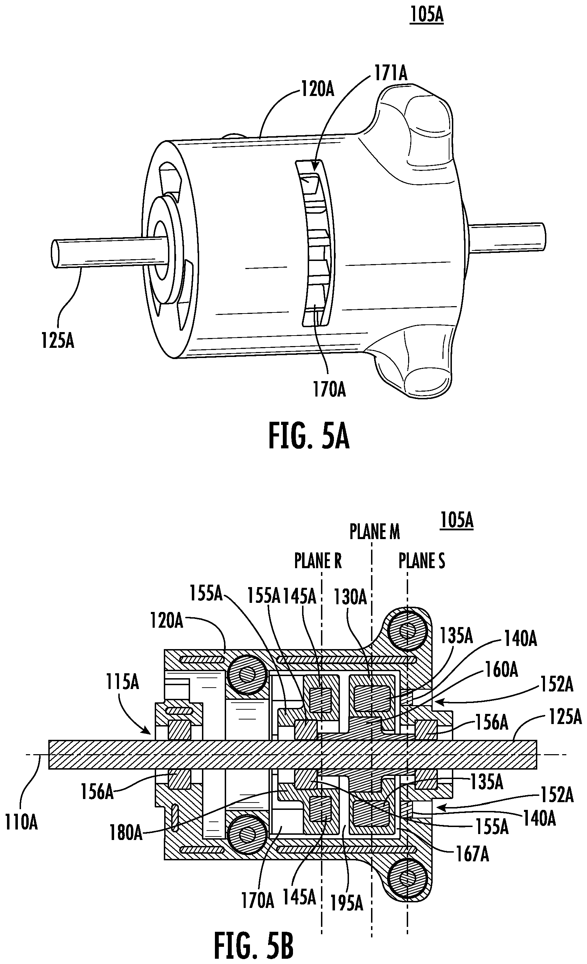

Figures 5A to 5E are renderings illustrating the magnetic transmission assembly 105A in the axial configuration in accordance with some embodiments of the present invention. These figures respectively depict a perspective view, a side cross-section view, an exploded view, a perspective cross-section view, and a longitudinal cross-section view of portions of the magnetic transmission assembly 105A.

In an embodiment, the magnetic transmission assembly 105A includes a housing 120A that is arranged to be fixedly mounted to the outer case 119A of the power tool. The magnetic transmission assembly 105A includes a stator 150A, further includes a rotor 180A that is fixed to a fan 170A, and a magnetic flux modulator 165A that rotates with the rotary shaft 125A and is positioned between the stator 150A and the rotor 180A. As shown in Figures 5A-5E, in the axial configuration the stator 150A, the magnetic flux modulator 165A, and the rotor 180A are located in respective planes that are spaced apart along the rotary shaft 125A.

In some embodiments of the invention, the stator 150A is fixed to the housing 120A of the magnetic transmission assembly 105A. In an embodiment, as shown in these figures, the stator 150A is formed integrally as a part of the housing 120A. Alternatively, the stator 150A may be provided as a separate annular component fixedly received within the housing 120A. The stator 150A concentrically surrounds the rotary shaft 125A and includes a plurality of permanent magnets 140A that are positioned within the stator 150A at respective locations around the rotary shaft 125A. In an embodiment, the stator 150A includes a series of outer pockets 152A formed as recessed regions in an end surface 154A of the housing 120A that receives the permanent magnets 140A therein. In an embodiment, the permanent magnets 140A are securely retained in the interior of the end surface 154A of the housing 120A. In an embodiment, the permanent magnets 140A are securely retained in the exterior of the end surface 154A of the housing 120A. Alternatively, and/or additionally, an adhesive is added to the pockets 152A in the end surface 154A to securely fix the permanent magnets 140A. As shown in Figure 5A, the housing 120A additionally includes openings 171A therein to enable the airflow.

The plurality of permanent magnets 140A in the stator 150A are oriented so that the poles of the permanent magnets 140A are oriented parallel to the rotary shaft 125A in alternating directions. In some embodiments according to the invention, each of the permanent magnets 140A is oriented so that the respective pole points in a direction that is opposite to the direction of the poles of each of the neighboring magnets. Accordingly, the arrangement of the permanent magnets 140A in the stator 150A can provide a number of poles for the stator 150A where the poles alternate between N-S or S-N orientations. It will be understood that in some embodiments according to the invention, the permanent magnets 140A of the stator 150A can have different arrangements that can provide a different number of poles for the stator 150A.

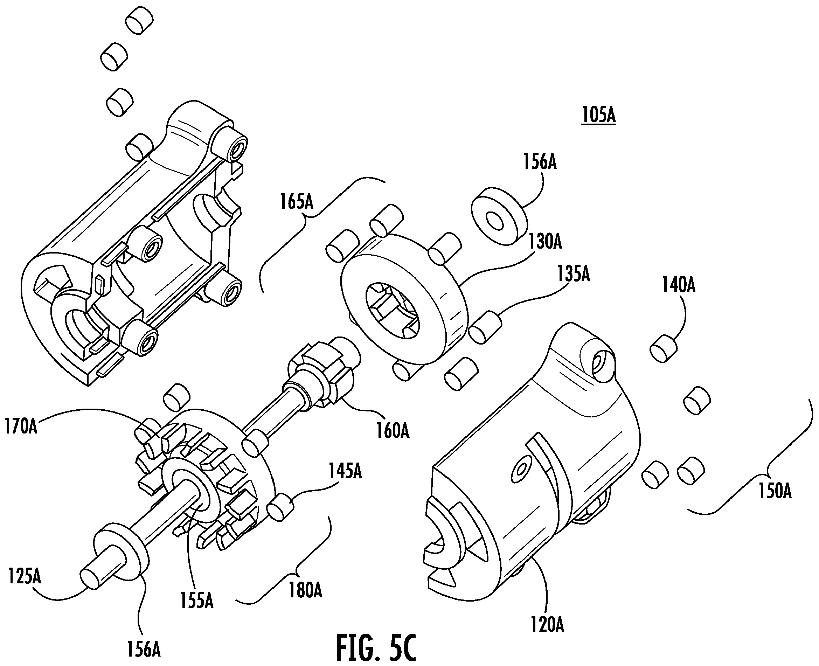

As shown in Figures 5B and 5C, the magnetic flux modulator 165A, the rotor 180A, and the stator 150A are each positioned concentrically in separate planes, M, R, S, respectively, spaced apart along the longitudinal axis 110A. Further, poles of the permanent magnets 140A and 145A are both oriented parallel to the longitudinal axis 110A. The rotary shaft 125A passes through a central rotor shaft channel 115A of the magnetic transmission assembly 105A that extends along the axis 110A. The rotary shaft 125A is axially and radially supported to the housing 120A via a pair of end bearings 156A located on the two ends of the housing 120A, which allow free rotation of the rotary shaft 125A relative to the housing 120A. Mounted on the rotary shaft 125A within the magnetic transmission assembly 105A is a bearing 155R that supports the rotor 180A relative to the rotary shaft 125A in a freely rotatable manner, and a bushing 160A that rigidly couples a magnetic flux modulator body 130A of the magnetic flux modulator 165A to the rotary shaft 125A.

The bearing 155A includes an inner surface rotatably fixed to the rotary shaft 125A and an outer surface rotatably fixed to the rotor 180A, thus allowing the rotor 180A to be freely rotatable relative to the rotary shaft 125A. As shown in Figure 5B, the bearing 155A is located on the rotary shaft 125A radially inward of the fan 170A, which is formed integrally with the rotor 180A.

The magnetic flux modulator body 130A is rigidly coupled to the rotary shaft 125A by the bushing 160A so that the magnetic flux modulator 165A rotates as the rotary shaft 125A spins. The magnetic flux modulator body 130A can be formed of a non-ferritic material, such as plastic, and securely houses a plurality of ferritic elements 135A embedded therein at respective ferritic positions. Specifically, the magnetic flux modulator body 130A includes an annular body that is mounted on the bushing 160A and that extends outward from the bushing 160A and houses the plurality of ferritic elements 135A in the plane M. The plurality of ferritic elements 135A are received axially into a series of axially-extending recesses formed within the magnetic flux modulator body 130A. The plurality of ferritic elements 135A are separated from the plurality of permanent magnets 140A in the stator 150A by an air gap 167A and are oriented in the axial direction to direct the magnetic flux from the stator 150A toward the rotor 180A as the magnetic flux modulator body 130A rotates. The plurality of ferritic elements 135A are separated from the plurality of permanent magnets 145A in the rotor 180A by an air gap 195A and are oriented in the axial direction to receive the magnetic flux from the stator 150A as the magnetic flux modulator body 130A rotates.

In operation, the magnetic flux generated by the plurality of permanent magnets 140A of the stator 150A can be modulated by the ferritic elements 135A of magnetic flux modulator 165A to apply torque to the magnetic field provided by the plurality of permanent magnets 145A of the rotor 180A to rotate the fan 170A at a stepped-up speed relative to the speed of the rotary shaft 125A.

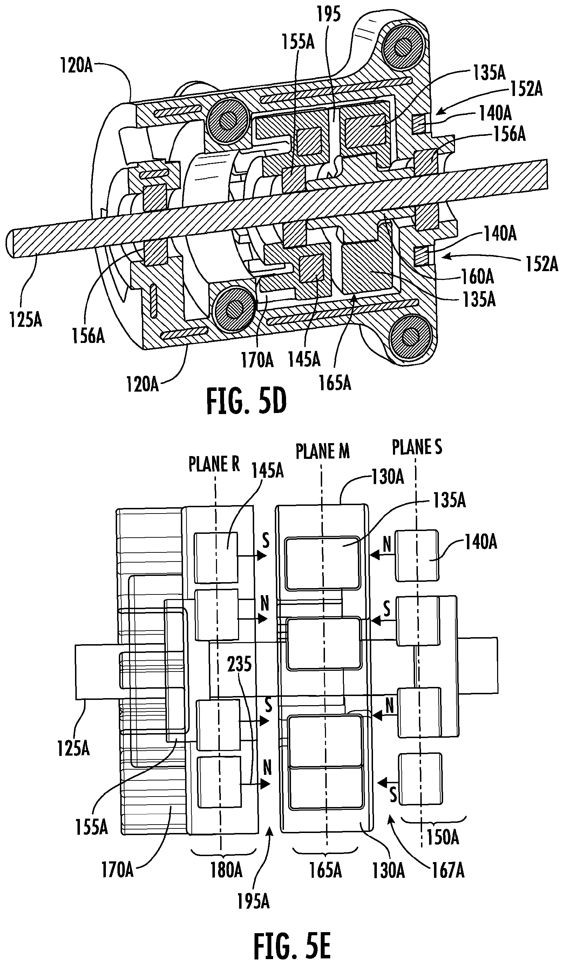

As shown in Figures 5D and 5E, the rotor 180A positioned in plane R is separated from the modulator 165A by the air gap 195R. In operation, the magnetic flux generated by the plurality of permanent magnets 140A of the stator 150A can be modulated by the ferritic elements 135A of magnetic flux modulator 165A to apply torque to the magnetic field provided by the plurality of permanent magnets 145A of the rotor 180A.

The rotor 180A includes the plurality of permanent magnets 145A embedded in the rotor body 130A oriented so that the respective pole of each magnet points in a direction that is opposite to the poles of each of the neighboring magnets. In an embodiment, the rotor 180A includes an annular body extending from the fan 170A through which a series of axial recesses are formed. The permanent magnets 145A are securely received inside the axial recesses axially opposite the ferritic elements 135A of magnetic flux modulator 165A. Accordingly, the arrangement of the permanent magnets 145A in the rotor 180A can provide a number of second poles for the rotor 180A where the poles alternate between N-S or S-N orientations. It will be understood that in some embodiments according to the invention, the permanent magnets of the rotor 180A can have different arrangements that can provide a different number of poles for the rotor 180A.

As shown in the longitudinal cross-sectional view of Figure 5E, in the axial configuration of the magnetic transmission assembly 105A, the poles of the permanent magnets 140A of the stator 150A are oriented in alternating directions so that the pole of each magnet is oriented opposite to the poles of the neighboring magnets 140A. In this arrangement, the stator 150A provides N pole pairs (e.g., 4 poles in this example).

As further shown in Figure 5E, the poles of the permanent magnets 145A in the rotor 180A are oriented in alternating directions so that the pole of each magnet is oriented opposite to the poles of the neighboring magnets 145A. In this arrangement, the rotor 150A provides M pole pairs (e.g., 3 pole pairs in this example). As discussed above, in an embodiment, the number of ferrite elements 135A = M + N (e.g., 7 in this example).

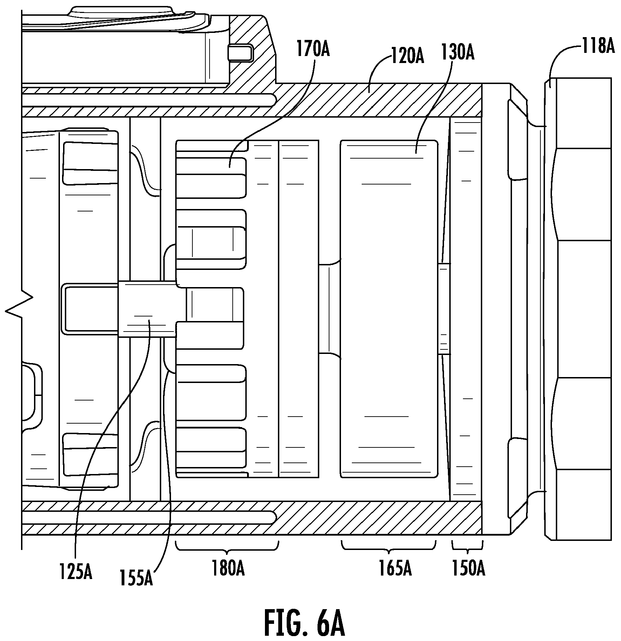

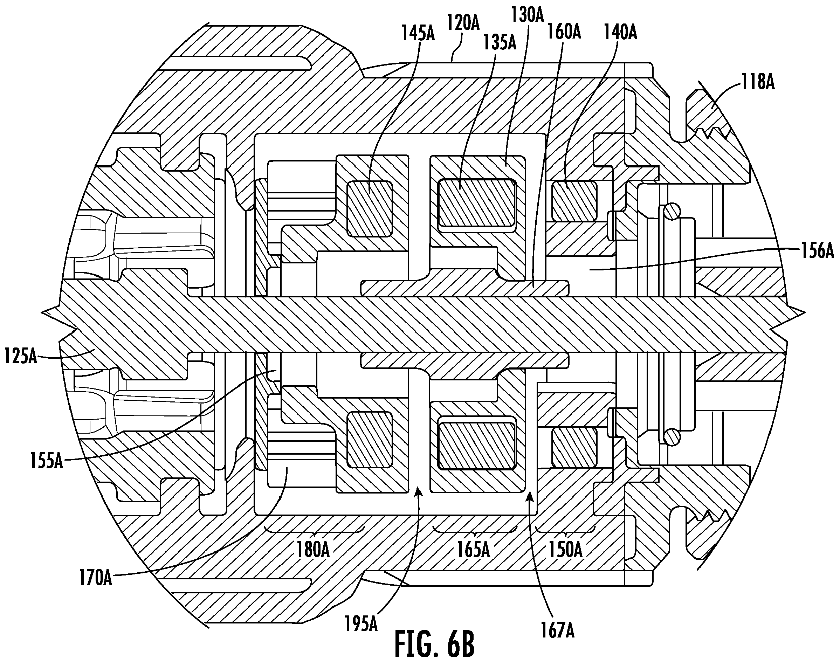

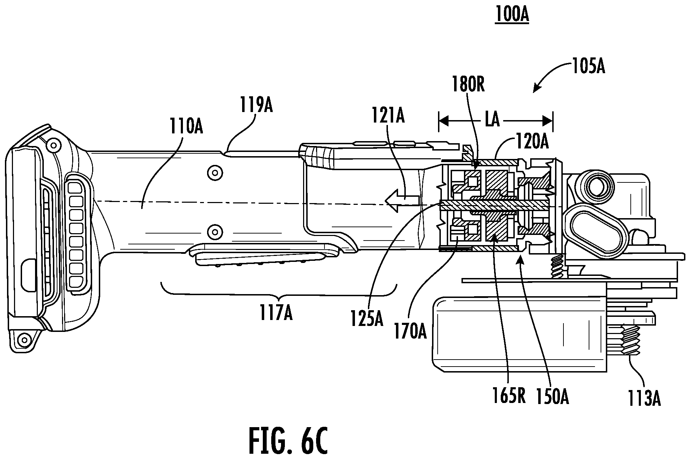

Figures 6A to 6C are renderings illustrating the magnetic transmission assembly 105A in the axial configuration disposed within the electric handheld angle grinder 100A in accordance with an alternative embodiment of the present invention. In this embodiment, housing 120A is not mounted within the outer case 119A of the power tool. Rather, the housing 120A forms a part of the tool housing and is mounted between the outer case 119A and the gear case 118A. Specifically, Figures 6A and 6B respectively show renderings of side and cross-section views of the magnetic transmission assembly 105A mounted between the outer case 119A and the gear case 118A. Figure 6C is a side view of the electric handheld angle grinder 100A including a cross-section view of the magnetic transmission assembly 105A mounted between the outer case 119A and the gear case 118A. According to Figure 6C, the magnetic transmission assembly 105A can have a length LA along the longitudinal axis 110A of the rotary shaft 125A. The fan 170A can be located to surround the rotary shaft 125A and face the motor section 117A. In operation, the rotary shaft 125A rotates at the motor speed to provide input to the magnetic transmission assembly 105A, which provides an output to the fan 170A at the stepped-up speed to generate airflow 121A through the case 119A past the motor. In some embodiments according to the invention, the rotary shaft 125A rotates at a maximum speed of up to 30,000 rpm, allowing the magnetic transmission assembly 105A to rotate the fan 170A at a maximum speed of up to about 60,000 rpm.

Similar to the previous embodiment, the plurality of ferritic elements 135A are shown in Figure 6B embedded into the non-ferritic body 130A of the magnetic flux modulator 165A. Further, the poles of the permanent magnets 145A of the rotor 180A face the plurality of ferritic elements 135A and face the poles of the permanent magnets 145A of the stator 150A along the longitudinal axis 110A.

As further shown in Figure 6B, the permanent magnets 140A of the stator 150A, the ferritic elements 135A of the magnetic flux modulator 165A, and the permanent magnets 145A of the rotor 180A are separated from one another by first and second air gaps 167A and 195A to provide a non-contacting relationship therebetween so that the rotation of the rotary shaft 125A can be magnetically coupled to the rotation of the fan 170R.

In an embodiment, an interior portion of the end surface of the housing 120A may include a series of pockets sized to receive the permanent magnets 140A therein. The permanent magnets 140A may be fixedly retained within the pockets via, for example, an adhesive, a snap-fit, etc. Alternatively, the interior portion of the end surface of the housing 120A may be molded around the permanent magnets 140A to fully contain the permanent magnets 140A within the body of the housing 120A.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

In some embodiments, the term "about" can generally refer to a range of numeric values that one of skill in the art would consider equivalent to the recited numeric value or providing equivalent function or result. For example, "about" may refer to a range that is within ± 1%, ± 2%, ± 5%, ± 7%, ± 10%, ± 15%, or even ± 20% of the indicated value, depending upon the numeric values that one of skill in the art would consider equivalent to the recited numeric value or having the same function or result. Furthermore, in some embodiments, a numeric value modified by the term "about" may also include a numeric value that is "exactly" the recited numeric value. In addition, any numeric value presented without modification will be appreciated to include numeric values "about" the recited numeric value, as well as include "exactly" the recited numeric value. Similarly, the term "substantially" can be largely, but not wholly, the same form, manner or degree and the particular element will have a range of configurations as a person of ordinary skill in the art would consider as having the same function or result. When a particular element is expressed as an approximation by use of the term "substantially," it will be understood that the particular element forms another embodiment.

In the specification, there have been disclosed embodiments of the application and, although specific terms are used, they are used in a generic and descriptive sense only and not for purposes of limitation.

**Claims**

1. A magnetic transmission assembly comprising:

  a housing having a longitudinal axis that extends from an input located at a proximate end of the magnetic transmission assembly to an output located at a remote end of the magnetic transmission assembly;
  a rotary shaft channel extending along the longitudinal axis of the magnetic transmission assembly from the proximate end to the remote end, the rotary shaft channel configured to receive a rotary shaft to couple to an electric hand-held power tool motor at the proximate end;
  a magnetic transmission inside the housing concentrically surrounding the rotary shaft channel, the magnetic transmission including:

  a magnetic flux modulator mounted on the rotary shaft and concentrically surrounding the rotary shaft channel, the magnetic flux modulator including a non-ferritic body supporting a plurality of ferritic elements spaced apart at respective ferritic positions;
  a rotor rotatably supported relative to the rotary shaft and including a rotor body supporting a plurality of first permanent magnets spaced apart at first respective angular positions;
  a stator secured to the housing and supporting a plurality of second permanent magnets spaced apart at second respective angular positions; and

  a fan concentrically located around the rotary shaft channel facing the proximate end of the magnetic transmission assembly and rigidly coupled to the rotor.

2. The magnetic transmission assembly of Claim 1 wherein the rotary shaft is a motor shaft received from the electric hand-held power tool motor in the rotary shaft channel extending from the input to the output, the magnetic transmission assembly further comprising a bushing rigidly coupling the motor shaft to the magnetic flux modulator.

3. The magnetic transmission assembly of Claim 1 wherein respective magnetic poles of the plurality of first permanent magnets and respective magnetic poles of the plurality of second permanent magnets are all oriented in either 1) a radial direction that is perpendicular to the longitudinal axis of the magnetic transmission assembly, or 2) a direction that is parallel to the longitudinal axis of the magnetic transmission assembly.

4. The magnetic transmission assembly of Claim 3 wherein:

  1) the rotor and the fan comprise a unitary structure further comprising at least one bearing arranged to at least radially support the rotor relative to the rotary shaft in a freely rotatable manner; and/or
  2) the magnetic flux modulator forms a cylindrical volume including an open end;
  wherein the rotor extends into the open end of the cylindrical volume to position the plurality of first permanent magnets of the rotor within the cylindrical volume radially inward of the plurality of second permanent magnets of the stator with the plurality of ferritic elements located radially therebetween.

5. The magnetic transmission assembly of Claim 1 wherein the plurality of first permanent magnets of the rotor, the plurality of second permanent magnets of the stator, and the plurality of ferritic elements are positioned in respective first, second, and third radial planes that are oriented in a direction that is perpendicular to the rotary shaft channel spaced apart from one another along the longitudinal axis.

6. The magnetic transmission assembly of Claim 1 wherein the plurality of first permanent magnets provides N pole pairs, the plurality of second permanent magnets provides M pole pairs, the plurality of ferritic elements is provided by N+M, and a ratio of a speed of the fan to a speed of rotation of the magnetic flux modulator is given by (N+M)/M.

7. An electric hand-held power tool comprising:

a motor shaft including an input portion configured to couple to a motor of the electric hand-held power tool and including an output portion that is rigidly coupled to the input portion of the motor shaft; and
a magnetic transmission concentrically surrounding the motor shaft between the input portion of the motor shaft and the output portion of the motor shaft, to form a motor shaft channel through the magnetic transmission through which the motor shaft extends from the input portion of the motor shaft to the output portion of the motor shaft.

8. The electric hand-held power tool of Claim 7 wherein the motor shaft rotates at a motor shaft speed, the electric hand-held power tool further comprising:
a fan rigidly coupled to the magnetic transmission and configured to rotate around the motor shaft at a fan speed that is greater than motor shaft speed to cool the motor of the electric hand-held power tool.

9. The electric hand-held power tool of Claim 7 wherein the magnetic transmission comprises:

a fixed stator that is concentrically mounted around the motor shaft;
a rotating input that is concentrically mounted around the motor shaft adjacent to the fixed stator; and
a rotating output that is concentrically located around the motor shaft adjacent to the rotating input, the rotating output configured to magnetically couple to the rotating input across an air gap separating the rotating input from the rotating output.

10. The electric hand-held power tool of Claim 9 wherein the fixed stator, the rotating input, and the rotating output are either 1) located overlapping one another in a radial direction relative to the motor shaft to provide a radial configuration of the magnetic transmission, or 2) spaced apart from one another along the motor shaft to provide an axial configuration of the magnetic transmission.

11. The electric hand-held power tool of Claim 7 wherein the magnetic transmission comprises:

a magnetic flux modulator concentrically surrounding the motor shaft, the magnetic flux modulator including a non-ferritic body with a plurality of ferritic elements spaced apart within the non-ferritic body at respective ferritic positions;
a rotor including a rotor body supporting a plurality of first permanent magnets spaced apart, the plurality of first permanent magnets having respective magnetic poles oriented in a direction facing the plurality of ferritic elements in the magnetic flux modulator; and
a stator including a plurality of second permanent magnets spaced apart within the stator, the plurality of second permanent magnets having respective magnetic poles oriented in an opposing direction facing the plurality of ferritic elements in the magnetic flux modulator opposite the rotor.

12. An electric hand-held power tool comprising:

a unitary motor shaft configured to rotate at a motor shaft speed responsive to rotation of a motor of the electric hand-held power tool; and
a magnetic transmission configured to magnetically couple rotation of the unitary motor shaft to a fan to cool the motor of the electric hand-held power tool.

13. The electric hand-held power tool of Claim 12 further comprising:
a bearing having the fan mounted thereon, the bearing including an opening therein wherein the unitary motor shaft extends through the opening of the bearing to enable the fan to rotate around the unitary motor shaft at a stepped-up speed relative to a speed of the unitary motor shaft.

**14.** The electric hand-held power tool of Claim 13 wherein the magnetic transmission further comprises:
a fixed stator, a rotating input, and a rotating output spaced apart from one another along the unitary motor shaft to provide an axial configuration of the magnetic transmission.

**15.** The electric hand-held power tool of Claim 13 wherein the bearing comprises a first bearing, the electric hand-held power tool further comprising:

a second bearing having the fan mounted thereon, the second bearing located on the unitary motor shaft spaced apart from the first bearing, the second bearing including a second opening therein wherein the unitary motor shaft extends through the second opening;
wherein the magnetic transmission further comprises a fixed stator, a rotating input, and a rotating output including the fan that are located overlapping one another in a radial direction relative to the unitary motor shaft to provide a radial configuration of the magnetic transmission.

FIG. 1A

100R

119R

140R

105R

118R

117R

113R

EP 4 395 144 A1

**FIG. 1B**

105R

152R

170R 140R 120R

121R

121R

121R

125R

171R 150R

## FIG. 2A

105R

L_R 200

120R 170R 145R 195R 130R

115R 110R

125R 156R

156R 155R 135R 167R 155R 160R

## FIG. 2B

FIG. 2C

FIG. 2D

FIG. 2E

FIG. 3A

FIG. 3B

EP 4 395 144 A1

FIG. 3C

FIG. 4A

FIG. 4B

105A

FIG. 5A

105A

FIG. 5B

EP 4 395 144 A1

105A

156A

130A

165A

135A

140A

170A

160A

145A

125A

155A

180A

150A

120A

156A

**FIG. 5C**

FIG. 5D

FIG. 5E

FIG. 6A

FIG. 6B

EP 4 395 144 A1

FIG. 6C

Europäisches
Patentamt

European
Patent Office

Office européen
des brevets

# EUROPEAN SEARCH REPORT

**Application Number**

EP 23 21 6283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 817 201 A1 (ALSTOM TRANSP TECH [FR]) 5 May 2021 (2021-05-05) | 1-7,9-15 | INV. H02K49/10 H02K7/14 H02K7/116 H02K9/04 B24B23/00 |
| Y | * figures 1,3,5 * | 8 | |
| Y | EP 3 396 816 A1 (HITACHI LTD [JP]) 31 October 2018 (2018-10-31) * Paragraphs 95-96; figure 15 * | 8 | |
| A | JP 5 789554 B2 (HITACHI IND EQUIPMENT SYS) 7 October 2015 (2015-10-07) * figures 1-6 * | 1-15 | |
| A | GB 2 102 216 A (MITSUBISHI ELECTRIC CORP [JP]) 26 January 1983 (1983-01-26) * figures 4,5,7-9 * | 1-15 | |

**TECHNICAL FIELDS SEARCHED (IPC)**

H02K
B24D
B24B

The present search report has been drawn up for all claims

| Place of search | Date of completion of the search | Examiner |
|---|---|---|
| The Hague | 15 May 2024 | Jabri, Tarak |

EPO FORM 1503 03.82 (P04C01)

## ANNEX TO THE EUROPEAN SEARCH REPORT
## ON EUROPEAN PATENT APPLICATION NO.

EP 23 21 6283

15-05-2024

| Patent document cited in search report | | Publication date | Patent family member(s) | | Publication date |
|---|---|---|---|---|---|
| EP 3817201 | A1 | 05-05-2021 | CN 112787463 | A | 11-05-2021 |
| | | | EP 3817201 | A1 | 05-05-2021 |
| | | | FR 3102896 | A1 | 07-05-2021 |
| | | | JP 2021078346 | A | 20-05-2021 |
| EP 3396816 | A1 | 31-10-2018 | NONE | | |
| JP 5789554 | B2 | 07-10-2015 | JP 5789554 | B2 | 07-10-2015 |
| | | | JP 2013211949 | A | 10-10-2013 |
| GB 2102216 | A | 26-01-1983 | AU 552562 | B2 | 05-06-1986 |
| | | | CH 664242 | A5 | 15-02-1988 |
| | | | ES 8309037 | A1 | 01-10-1983 |
| | | | FR 2506536 | A1 | 26-11-1982 |
| | | | GB 2102216 | A | 26-01-1983 |
| | | | JP S57193951 | A | 29-11-1982 |
| | | | MX 152982 | A | 11-07-1986 |

For more details about this annex : see Official Journal of the European Patent Office, No. 12/82